# EUROPÄISCHE PATENTSCHRIFT

(11) **EP 3 828 405 B1**
(45) Veröffentlichungstag und Bekanntmachung des Hinweises auf die Patenterteilung: **07.06.2023**
(21) Anmeldenummer: 20209992.5
(22) Anmeldetag: 26.11.2020
(51) Int. Cl.: F02D 29/06, F02D 41/00, F02B 37/10, F02B 39/10

(54) **STROMAGGREGAT ZUR EINSPEISUNG VON INSBESONDERE AUS GASFÖRMIGEN BRENNSTOFFEN GEWONNENER ENERGIE IN EIN ELEKTRISCHES ENERGIEVERSORGUNGSNETZ UND VERFAHREN ZUM REGELN EINES SOLCHEN STROMAGGREGATS**
POWER UNIT FOR FEEDING IN OF IN PARTICULAR ENERGY OBTAINED FROM GASEOUS FUELS INTO AN ELECTRIC POWER SUPPLY NETWORK AND METHOD FOR CONTROLLING SUCH A POWER UNIT
GROUPE ÉLECTROGÈNE DESTINÉ À L'ALIMENTATION, EN PARTICULIER EN ÉNERGIE GÉNÉRÉE À PARTIR DE COMBUSTIBLES GAZEUX D'UN RÉSEAU D'ALIMENTATION ÉLECTRIQUE ET PROCÉDÉ DE RÉGLAGE D'UN TEL GROUPE ÉLECTROGÈNE

(30) Priorität: 28.11.2019 DE 102019132334
(43) Veröffentlichungstag der Anmeldung: 02.06.2021
(73) Patentinhaber: Geisberger, Maximilian, 84419 Schwindegg (DE)
(72) Erfinder: Geisberger, Maximilian, 84419 Schwindegg (DE); Eichhorn, Sebastian, 83624 Otterfing (DE)
(74) Vertreter: Flügel Preissner Schober Seidel

(56) Entgegenhaltungen:
- EP-A1- 2 402 583
- WO-A1-2005/071241
- DE-A1-102007 017 777
- DE-C2- 19 518 317
- JP-A- 2001 323 825
- US-A- 4 680 933

## Beschreibung

Die Erfindung betrifft ein Stromaggregat zur Einspeisung von insbesondere aus gasförmigen Brennstoffen gewonnener Energie in ein elektrisches Energieversorgungsnetz. Das Stromaggregat weist einen Turbolader auf, der mit einer Regelvorrichtung gekoppelt ist. Ferner betrifft die Erfindung ein Verfahren zum Regeln eines solchen Stromaggregats.

Zur Einspeisung von Energie in ein elektrisches Energieversorgungsnetz ist es bekannt, eine Verbrennungskraftmaschine einzusetzen, die einen Generator antreibt. Die Verbrennungskraftmaschine wandelt die chemische Energie eines Brennstoffes, insbesondere eines Gases, wie beispielsweise Biogas, Holzgas, Grubengas, Erdgas oder Propan, in kinetische Energie um. Die erzeugte Leistung der Verbrennungskraftmaschine wird durch die Menge des Brennstoff-Luft-Gemischs reguliert, die Zylindern der Verbrennungskraftmaschine zugeführt wird. Die zugeführte Menge des Brennstoff-Luft-Gemischs wird üblicherweise mittels einer Drosselklappe reguliert, wie es auch für Ottomotoren von Kraftfahrzeugen bekannt ist. Allerdings sind die dynamischen Anforderungen an die Motoren von Kraftfahrzeugen erheblich höher und erfordern einen drehzahlvariablen Betrieb.

Eine herkömmliche Drosselklappe reguliert die Zufuhr an Brennstoff, indem die Öffnungsgröße durch die Stellung der Drosselklappe entsprechend justiert wird. Durch die erzeugte Verengung der Durchgangsöffnung im Ansaugtrakt, die durch die Stellung der Drosselklappe verursacht wird, entstehen Druckverluste. Derartige Verluste sind als Drosselverluste bekannt.

Zur Aufladung der Verbrennungskraftmaschine kann ein Turbolader verwendet werden. Dabei wird ein Teil der Abgasenergie mittels einer Turbine genutzt, um einen Verdichter anzutreiben. Der angetriebene Verdichter erhöht den Druck des Brennstoff-Luft-Gemischs im Ansaugtrakt, wodurch die Dichte des in den Zylinder einführbaren Gemischs erhöht wird.

Der durch die Verbrennungskraftmaschine angetriebene Generator wandelt die kinetische Energie in elektrische Energie um. Die erzeugte elektrische Energie wird wiederum in das Energieversorgungsnetz eingespeist.

Um sicherzustellen, dass die angeforderte elektrische Leistung ausgeregelt und der Betriebszustand des Generators gehalten wird, ist es notwendig, die Verbrennungskraftmaschine durchgehend zu regeln.

Der Wirkungsgrad des gesamten Stromaggregats bildet sich durch das Verhältnis der zur Verfügung stehenden chemischen Energie des Brennstoffs und der elektrischen Energie, die in das Energieversorgungsnetz eingespeist wird. Die erzeugte elektrische Energie ist geringer als die chemische Energie des Brennstoffs, da beispielsweise Energie durch die Drosselung der Verbrennungskraftmaschine mittels der Drosselklappe oder in Form von Wärme, die während des Betriebs des Stromaggregats erzeugt wird, verloren geht. Diese Energieverluste stehen folglich der Umwandlung in elektrische Energie nicht zur Verfügung.

Eine Vorrichtung zum Betreiben eines elektrisch unterstützten Turboladers für den Verbrennungsmotor eines Kraftfahrzeugs beschreibt DE 195 18 317 C2. An dem Turbolader ist ein Motor-Generator-Aggregat angeordnet. Überschüssige Energie, die gewöhnlich über ein Bypass-Ventil an dem Verdichter des Turboladers vorbei geleitet wird, wird zum Betreiben des Motor-Generator-Aggregats verwendet und in das Bordnetz des Kraftfahrzeugs zurückgespeist.

Aus DE 10 2018 203 197 B3 ist ein Verfahren zum Inbetriebnehmen einer Brennkraftmaschine bekannt, bei dem die Brennkraftmaschine aus einem Ruhezustand lastfrei auf eine vorbestimmte Drehzahl gebracht wird. Der Ladedruck in einem Ladepfad der Brennkraftmaschine wird über einen einem momentanen Betriebszustand der Brennkraftmaschine entsprechenden Ladedruckwert hinaus angehoben. Der Brennkraftmaschine wird eine Last aufgeschaltet, wenn die Brennkraftmaschine die vorbestimmte Drehzahl erreicht. Der Ladedruck wird angehoben, indem ein Verdichter in dem Ladepfad der Brennkraftmaschine über eine dem momentanen Betriebszustand der Brennkraftmaschine entsprechende Verdichterdrehzahl hinaus angetrieben wird. Der Verdichter wird durch Beaufschlagen einer mit dem Verdichter antriebswirkverbundenen Turbine mit Druckgas angetrieben.

Weiterhin beschreibt US 2014/0015257 A1 ein Stromerzeugungssystem, das einen Motor, einen elektrischen Generator und eine Systemsteuerung umfasst. Der Motor ist zur Erzeugung mechanischer Leistung konfiguriert und umfasst eine Motorsteuerung und einen Turbolader zum Erhöhen des Luftdrucks auf einen Ladedruck. Der Turbolader wird während des stationären Betriebs des Systems von der Motorsteuerung gesteuert. Der elektrische Generator ist mechanisch mit dem Motor verbunden und wandelt mechanische Energie in elektrische Energie um. Die Systemsteuerung ist so konfiguriert, dass sie ein Signal empfängt, das eine elektrische Belastung des Generators anzeigt. Während eines Übergangszustands, in dem die elektrische Last zunimmt, ist die Systemsteuerung so konfiguriert, dass sie den Turbolader direkt steuert, um die Konfiguration des Turboladers zu ändern und den Ladedruck zu erhöhen.

Ferner wird in WO 2005/071241 A1 ein Verfahren zur Steuerung eines elektrisch angetriebenen Verdichters einer Verbrennungskraftmaschine für ein Kraftfahrzeug beschrieben, bei dem die Größen einer geforderten Verdichterleistung und einer benötigten Verdichterdrehzahl auf der Grundlage eines Modells als Funktion eines jeweils gewünschten Aufladungsgrades beziehungsweise Ladedrucks und eines erforderlichen Luft-Massenstromes bestimmt wird.

JP 2001 323825 A offenbart einen Vormischkompressions-Selbstzündungsmotor und ein zugehöriges Steuerungsverfahren. Eine Luftzufuhröffnung des Vormischkompressions-Selbstzündungsmotors ist mit einer luftzufuhrseitigen Turbine eines Turboladers und einem Kraftstofftank verbunden. Eine Auslassöffnung des Vormischkompressions-Selbstzündungsmotors ist mit einer abgasseitigen Turbine des Turboladers verbunden. Eine Antriebswelle des Turboladers dient als Motor und zur Energieerzeugung. Eine Steuereinrichtung empfängt das Signal eines Detektors zum Erfassen der Luftzufuhrmenge des Turboladers und erzeugt ein Schaltsignal für die Antriebswelle.

Der Erfindung liegt die Aufgabe zugrunde, ein Stromaggregat zur Einspeisung von Energie in ein Energieversorgungsnetz zu schaffen, das einen optimierten elektrischen Gesamtwirkungsgrad aufweist.

Diese Aufgabe wird durch ein Stromaggregat nach Anspruch 1 und ein Verfahren nach Anspruch 9 gelöst.

Bevorzugte Ausgestaltungen des Stromaggregats und des Verfahrens sind Gegenstand der Ansprüche 2 bis 8 und 10.

Das erfindungsgemäße Stromaggregat zur Einspeisung von insbesondere aus gasförmigen Brennstoffen gewonnener Energie in ein elektrisches Energieversorgungsnetz umfasst einen Generator zum Erzeugen von elektrischer Energie, die in das Energieversorgungsnetz einspeisbar ist, und eine den Generator bevorzugterweise mittels einer Kurbelwelle antreibende Verbrennungskraftmaschine, die eine vorgegebene Leistung erzeugt. Des Weiteren umfasst das Stromaggregat einen Turbolader, der eine Turbine und einen die Verbrennungskraftmaschine aufladenden Verdichter aufweist, und eine Regelvorrichtung. Die Turbine und der Verdichter sind bevorzugterweise mittels wenigstens einer Welle miteinander verbunden und haben jeweils eine Rotationsgeschwindigkeit. Die Regelvorrichtung ist erfindungsgemäß derart ausgestaltet, dass die von der Verbrennungskraftmaschine erzeugte Leistung mittels der Rotationsgeschwindigkeit des Verdichters vollständig geregelt wird.

Das erfindungsgemäße Stromaggregat hat den Vorteil, dass im Normalbetrieb des Stromaggregats die Verbrennungskraftmaschine über den Verdichter anstatt mittels der Drosselklappe geregelt werden kann. Drosselverluste treten somit nicht auf, wodurch ein effizienterer Betrieb ermöglicht wird. Die vollständige Regelung der von der Verbrennungskraftmaschine erzeugten Leistung mittels der Rotationsgeschwindigkeit des Verdichters kann supplementär zu herkömmlichen Regelungstechniken der Verbrennungskraftmaschine verwendet werden. Zum Zweck der vorliegenden Erfindung werden unter Regelungstechniken Ausgestaltungen verstanden, welche geeignet sind, die Leistung der Verbrennungskraftmaschine zu regeln, wie beispielsweise eine Drosselklappe oder ein Drosselventil; ein Sperrventil, welche die Zufuhr eines Brennstoff-Luft-Gemischs in den Zylinder unmittelbar reduziert oder versperrt; eine Reduzierung des Brennstoffs, um ein mageres Brennstoff-Luft-Gemisch zu erzeugen; eine Erhöhung der Menge des Brennstoffs, um ein fettes Brennstoff-Luft-Gemisch zu erzeugen; eine Unterbindung der Zündung oder ein Verschieben des Zündzeitpunkts; etc.

Die Turbine des Turboladers wird zweckmäßigerweise durch die Strömungsenergie der Abgase der Verbrennungskraftmaschine angetrieben. Die Welle des Turboladers oder auch die Turbine können über eine Verbindung mit der Kurbelwelle angetrieben werden, wie es beispielsweise von einem herkömmlichen Kompressor bekannt ist.

Die erfindungsgemäße Regelung weist den zusätzlichen Vorteil auf, dass die erzeugte Leistung der Verbrennungskraftmaschine kurzfristig stark reduziert werden kann, indem der Verdichter den erzeugten Druck des Brennstoff-Luft-Gemischs reduziert oder sogar invertiert.

Das erfindungsgemäße Stromaggregat eignet sich insbesondere für Blockheizkraftwerke, vor allem inselbetriebene Blockheizkraftwerke.

Vorteilhaft ist die Leistung der Verbrennungskraftmaschine ausschließlich durch die Regelvorrichtung regelbar. Aufgrund der ausschließlichen Regelung der Verbrennungskraftmaschine mittels der Regelvorrichtung, die mit dem Turbolader verbunden ist, kann auf eine Regelungstechnik, wie beispielsweise die Drosselklappe oder auch andere Regelungstechniken, bei Bedarf vollständig verzichtet werden. Ausschließlich in voranstehenden Sinne bedeutet, dass die Regelung während des statischen Betriebs im Auslegungsbereich alleinig von der Regelvorrichtung, die mit dem Turbolader verbunden ist, übernommen wird. Außerhalb dessen, beispielsweise bei den Notzuständen der Überlast, der Überdrehzahl und der klopfenden Verbrennung sowie dynamischen Verschiebungen des Betriebspunktes, etwa aufgrund von Schwankungen der Gasqualität oder einem Lastabwurf, können zusätzliche Notregelmechanismen angewendet werden. Bei diesen Regelungstechniken handelt es sich vorteilhafterweise um eine für diese Fälle vorgehaltene Drosselklappe, die Abschaltung von Zylindern, die Veränderung des Gasgemisches, die Abschaltung der Gaszufuhr oder die Verschiebung des Zündzeitpunktes. Vor allem bei einem Start des Motors mit dynamischen Ansprüchen an die Zusammensetzung des Brennstoff-Luft-Gemischs und der Drehzahlregelung ist eine zusätzliche, alternative Regelungskette erforderlich.

In einer vorteilhaften Ausgestaltung ist die Welle des Turboladers über eine Verbindung mit der Kurbelwelle antreibbar. Dabei wird der Verdichter über eine mechanische Verbindung mit der Kurbelwelle angetrieben, vergleichbar zu einem herkömmlichen Kompressor. Eine derartige Verbindung hat den Vorteil, dass insbesondere bei einer geringen Strömungsenergie oder einer geringen inneren Energie der Abgase, die erzeugte Leistung der Verbrennungskraftmaschine effektiv geregelt, insbesondere erhöht, werden kann. In einer weiteren vorteilhaften Ausgestaltung ist eine Kupplung in der Verbindung enthalten, wodurch die Übertragung der Drehzahl der Kurbelwelle an die Turbine variiert werden kann.

Erfindungsgemäß umfasst die Regelvorrichtung eine Energieverteilungseinheit, die einerseits überschüssige Rotationsenergie der Turbine in elektrische Energie umwandelt und in das Energieversorgungsnetz einspeist und die andererseits bei Bedarf den von dem Verdichter erzeugten Ladedruck unabhängig von der angetriebenen Turbine durch Zuführen von elektrischer Energie aus dem Energieversorgungsnetz erhöht. Indem die Regelvorrichtung zusätzlich eine Energieverteilungseinheit aufweist, kann die abgeführte Energie des Turboladers in elektrische Energie umgewandelt und ebenfalls in das Stromnetz eingespeist werden. Dabei kann die mechanische Leistung genutzt werden, die sich aus der Differenz der auf die Turbine übertragenen inneren Energie der Abgase und der Rotationsenergie des Verdichters ergibt. Bei einem herkömmlichen Verbrennungsmotor geht die zuvor beschrieben Differenz als Verlust an der Drosselklappe ungenutzt verloren. Diese Energiedifferenz, die bei herkömmlichen Verbrennungsmotoren ungenutzt bleibt, kann zweckmäßigerweise über die Energieverteilungseinheit in elektrische Energie umgewandelt und in das Energieversorgungsnetz eingespeist werden. Der Gesamtwirkungsgrad des Stromaggregats erhöht sich zusätzlich, indem mehr elektrische Energie in das Energieversorgungsnetz eingespeist werden kann. Durch die Energieverteilungseinheit ergibt sich zudem der Vorteil, dass der Ladedruck durch den Verdichter unabhängig von der angetriebenen Turbine erhöht werden kann. Entsprechend kann die Verbrennungskraftmaschine schneller angefahren werden und die Leistung an kurzfristige Schwankungen angepasst werden. Dies ist insbesondere dann hilfreich, wenn die Strömungsenergie der Abgase der Verbrennungskraftmaschine die Turbine nicht ausreichend antreiben kann. Die zum Antreiben des Verdichters zusätzlich benötigte Energie kann somit von der Regelvorrichtung zur Verfügung gestellt werden. Die Regelvorrichtung kann die hierzu benötigte Energie zum Antreiben des Motors aus dem Energieversorgungsnetz beziehen.

In einer weiteren vorteilhaften Ausgestaltung werden die mittels der Regelvorrichtung in elektrische Energie umgewandelte Rotationsenergie und die vom Generator erzeugte elektrische Energie vor der Einspeisung in das Energieversorgungsnetz zusammen geführt. Die elektrische Energie wird über ein Mittel zum Zusammenführen der Energien, im einfachsten Fall etwa eine Stromschiene, zusammengeführt. Folglich kann ein Stromzähler, beispielsweise zur Berechnung der Einspeisevergütung, sowohl die durch die vom Generator erzeugte elektrische Energie als auch die von der Regelvorrichtung erzeugte elektrische Energie erfassen, bevor die elektrische Energie des Stromaggregats in das Energieversorgungsnetz eingespeist wird.

Erfindungsgemäß umfasst die Regelvorrichtung einen Frequenzumrichter. Der Frequenzumrichter generiert eine in der Frequenz und Amplitude veränderbare Wechselspannung. Der Frequenzumrichter ermöglicht es, stufenlos die Frequenz, mit welcher der Elektromotor angesteuert wird, einzustellen und somit die Rotationsgeschwindigkeit des Verdichters stufenlos zu regeln. Außerdem wird es durch den Frequenzumrichter ermöglicht, stufenlos die Drehzahlen von nahezu null bis zur Nenndrehzahl zu erreichen, ohne dass das Drehmoment sinkt. Der Motor kann auch über die Nenndrehfrequenz betrieben werden, dann sinkt das abgegebene Moment jedoch ab, da die Betriebsspannung nicht weiter der erhöhten Frequenz angepasst werden kann. Dadurch kann eine besonders exakte Regelung der Verbrennungskraftmaschine über die somit genau definierte Drehzahl des Verdichters ermöglicht werden.

Erfindungsgemäß ist der Frequenzumrichter ausgestaltet, die überschüssige Rotationsenergie als Funktion der Rotationsgeschwindigkeit der Turbine und der geforderten Änderung der Leistung der Verbrennungskraftmaschine zu bestimmen. Zweckmäßigerweise ist die überschüssige Rotationsenergie kontinuierlich einstellbar. Die stufenlose Regelung mittels des Frequenzumrichters ermöglicht eine sehr fein abgestimmte Regelung des Drehmoments, wodurch wiederum die Drehzahl des Verdichters sehr detailliert abgestimmt werden kann.

Vorteilhaft sind die Turbine und der Verdichter mittels einer Welle verbunden. Die Rotationsenergie der Turbine wird somit direkt auf den Verdichter übertragen. Folglich ist die Rotationsgeschwindigkeit des Verdichters und der Turbine identisch.

Bei Bedarf kann die Regelvorrichtung eine zweite Welle aufweisen, die mit der Welle des Turboladers gekoppelt ist. In einer vorteilhaften Ausgestaltung ist ein Getriebe in den Kraftfluss der beiden Wellen zwischengeschaltet, wodurch die Drehzahl der zweiten Welle variiert werden kann. Dadurch kann zusätzlich die überschüssige, abzuführende Energie variiert werden.

Vorteilhafterweise ist die Regelvorrichtung ausgebildet, die Drehzahl des Verdichters zu erhöhen. Zweckmäßigerweise umfasst die Energieverteilungseinheit einen Elektromotor, insbesondere einen Asynchronmotor, einen permanentmagneterregten Synchronmotor oder einen Synchron-Reluktanzmotor, um eine praxisgerechte Ausgestaltung sicherzustellen. Die derart ausgestalteten Motoren weisen die Vorteile auf, dass diese kompakt, robust und wartungsarm sind.

Vorteilhaft ist die Regelvorrichtung an eine separate Energieversorgungsquelle angeschlossen. Es ergibt sich daraus der Vorteil, dass insbesondere zum Anfahren des etwa im Inselbetrieb betriebenen Stromaggregats vergleichsweise einfach schnelle, kurze Regelungen durchgeführt werden können, die einen erhöhten Energieaufwand benötigen. Die Verbrennungskraftmaschine kann somit über einen kurzen Zeitraum durch eine starke Erhöhung der Drehzahl des Verdichters den Druck des Brennstoff-Luft-Gemischs im Ansaugtrakt erhöhen und somit aufgrund der erhöhten Dichte des in die Zylinder eingeführten Gemischs die erzeugte Leistung der Verbrennungskraftmaschine schnell hochfahren. Insbesondere ist eine derartige Regelung vorteilhaft, wenn die Strömungsenergie der Abgase die Turbine noch nicht ausreichend antreiben kann und somit der Druck des Brennstoff-Luft-Gemischs noch nicht effektiv über den Verdichter erhöht wird. Das sogenannte Turboloch tritt bei einer derartigen Regelung nicht auf. Der Verdichter kann auf diese Weise effektiv geregelt werden, sodass die Leistung der Verbrennungskraftmaschine durchgehend geregelt wird.

Die obigen Ausführungen und genannten Vorteile im Zusammenhang mit dem erfindungsgemäßen Stromaggregat gelten ebenso für das beanspruchte Verfahren.

In einer bevorzugten Ausgestaltung des erfindungsgemäßen Verfahrens wird die überschüssige Rotationsenergie der Turbine in elektrische Energie umgewandelt, wobei zweckmäßigerweise die überschüssige elektrische Energie in das Energieversorgungsnetz eingespeist wird. Mittels eines solchen Verfahrens kann der Gesamtwirkungsgrad des erfindungsgemäßen Stromaggregats signifikant erhöht werden.

Vorteilhaft werden die Rotationsenergie, die in elektrische Energie mittels der Regelvorrichtung umgewandelte wurde, und die vom Generator erzeugte elektrische Energie vor der Einspeisung in das Energieversorgungsnetz zusammengeführt. Insbesondere kann dies über ein Mittel zum Zusammenführen der beiden Energien, etwa eine Stromschiene, erfolgen. Folglich kann die Einspeisevergütung durch einen Zähler bestimmt werden, bevor die erzeugte Energie des Stromaggregats in das Energieversorgungsnetz eingespeist wird.

Ein Ausführungsbeispiel der Erfindung wird im Folgenden anhand einer schematischen Zeichnung näher erläutert. In der Zeichnung zeigt:

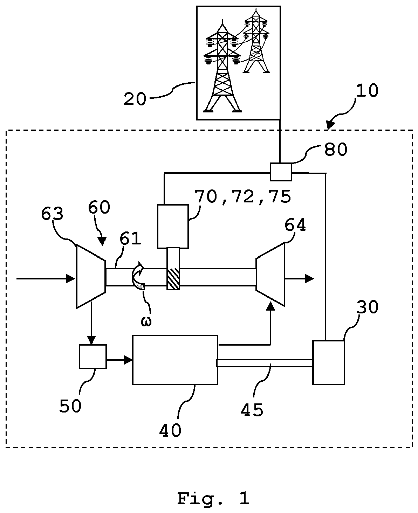

- Fig.1: den Aufbau des erfindungsgemäßen Stromaggregats.

Fig. 1 zeigt ein Stromaggregat 10, das eine Verbrennungskraftmaschine 40 aufweist, die einen Generator 30 mittels einer Kurbelwelle 45 antreibt. Der angetriebene Generator 30 erzeugt elektrische Energie, insbesondere Strom, welche in ein Energieversorgungsnetz 20 eingespeist wird.

Das Stromaggregat 10 weist einen Turbolader 60 auf. Der Turbolader 60 wird über eine Turbine 64 durch die Strömungsenergie der Abgase der Verbrennungskraftmaschine 40 angetrieben. Die Rotationsenergie der Turbine 64 wird über eine erste Welle 61 auf einen Verdichter 63 übertragen, sodass die Turbine 64, die Welle 61 und der Verdichter 63 dieselbe Rotationsgeschwindigkeit w aufweisen. Der Verdichter 63 erhöht den Druck des Brennstoff-Luft-Gemischs im Ansaugtrakt, welches der Verbrennungskraftmaschine 40 über einen Ladeluftkühler 50 zugeführt wird.

Der Turbolader 60 ist mit einer Regelvorrichtung 70 verbunden, indem die Welle 61 mit einer zweiten Welle gekoppelt ist, wobei die zweite Welle ausgestaltet ist, Rotationsenergie der ersten Welle 61 aufnehmen zu können.

Die Regelvorrichtung 70 weist ferner eine Energieverteilungseinheit 75 auf. Die Energieverteilungseinheit 75 kann einen Motor, insbesondere einen Asynchron-, einen permanentmagneterregten Synchron- oder einen Synchron-Reluktanzmotor, umfassen, der mittels eines Frequenzumrichters 72 geregelt wird.

Der Regelvorrichtung 70 ist ausgestaltet, die überschüssige Rotationsenergie als Funktion der Rotationsgeschwindigkeit w der Turbine 64 und der geforderten Änderung der Leistung der Verbrennungskraftmaschine 40 zu bestimmen, wobei die überschüssige Rotationsenergie kontinuierlich eingestellt werden kann.

Die Regelvorrichtung 70 regelt die Rotationsgeschwindigkeit w des Verdichters 63 zweckmäßigerweise in Abhängigkeit von der Drehzahl der Kurbelwelle 45 der Verbrennungskraftmaschine 40, die mit dem Generator 30 verbunden ist. Alternativ kann die Rotationsgeschwindigkeit w des Verdichters 63 in Abhängigkeit von der erzeugten Frequenz der von dem Generator 30 generierten elektrischen Energie geregelt werden.

Die Energieverteilungseinheit 75 ist bevorzugt dazu ausgebildet, elektrische Energie zu erzeugen. Hierfür kann die Energieverteilungseinheit 75 einen Hilfsgenerator umfassen.

Die erzeugte elektrische Energie der Regelvorrichtung 70 wird mit der erzeugten elektrischen Energie des Generators 30 über ein Mittel zum Zusammenführen der Energien 80, beispielsweise eine Stromschiene, zusammengeführt, bevor diese zusammengeführte elektrische Energie dann über einen Stromzähler in das Energieversorgungsnetz 20 eingespeist wird.

Der Betrieb des Stromaggregats 10 weist folglich einen hohen Gesamtwirkungsgrad auf.

### Bezugszeichenliste

- 10: Stromaggregat
- 20: Energieversorgungsnetz
- 30: Generator
- 40: Verbrennungskraftmaschine
- 45: Kurbelwelle
- 50: Ladeluftkühler
- 60: Turbolader
- 61: Welle
- 63: Verdichter
- 64: Turbine
- 70: Regelvorrichtung
- 72: Frequenzumrichter
- 75: Energieverteilungseinheit
- 80: Mittel zum Zusammenführen der Energien

- ω: Rotationsgeschwindigkeit

## Patentansprüche

1. Stromaggregat (10) zur Einspeisung von insbesondere aus gasförmigen Brennstoffen gewonnener Energie in ein elektrisches Energieversorgungsnetz (20), umfassend:
einen Generator (30) zum Erzeugen von elektrischer Energie, die in das Energieversorgungsnetz (20) einspeisbar ist;
eine den Generator (30) antreibende Verbrennungskraftmaschine (40), die eine vorgegebene Leistung erzeugt;
einen Turbolader (60), der eine Turbine (64) und einen die Verbrennungskraftmaschine (40) durch einen Ladedruck aufladenden Verdichter (63) aufweist, und
eine Regelvorrichtung (70);
wobei die Turbine (64) und der Verdichter (63) miteinander verbunden sind und jeweils eine Rotationsgeschwindigkeit (ω) haben;
wobei die Regelvorrichtung (70) derart ausgestaltet ist, dass die von der Verbrennungskraftmaschine (40) erzeugte Leistung mittels der Rotationsgeschwindigkeit (w) des Verdichters (63) vollständig geregelt wird;
**dadurch gekennzeichnet, dass** die Regelvorrichtung (70) einen Frequenzumrichter (72) und eine Energieverteilungseinheit (75) umfasst;
wobei die Energieverteilungseinheit (75) einen durch den Frequenzumrichter (72) geregelten Elektromotor umfasst und ausgestaltet ist, einerseits überschüssige Rotationsenergie der Turbine (64) in elektrische Energie umzuwandeln und in das Energieversorgungsnetz (20) einzuspeisen und andererseits bei Bedarf den von dem Verdichter (63) erzeugten Ladedruck unabhängig von der angetriebenen Turbine (64) durch Zuführen von elektrischer Energie aus dem Energieversorgungsnetz (20) zu erhöhen; und
wobei der Frequenzumrichter (72) ausgestaltet ist, die überschüssige Rotationsenergie als Funktion der Rotationsgeschwindigkeit (w) der Turbine (64) und der geforderten Änderung der Leistung der Verbrennungskraftmaschine (40) zu bestimmen.

2. Stromaggregat nach Anspruch 1, **dadurch gekennzeichnet, dass** die Leistung der Verbrennungskraftmaschine (40) ausschließlich durch die Regelvorrichtung (70) regelbar ist.

3. Stromaggregat nach Anspruch 1 oder 2, **gekennzeichnet durch**
eine Kurbelwelle (45), die den Generator (30) antreibt, und
wenigstens eine Welle (61), durch welche die Turbine (64) und der Verdichter (63) miteinander verbunden sind.

4. Stromaggregat nach einem der Ansprüche 1 bis 3, **gekennzeichnet durch** ein Mittel zum Zusammenführen von elektrischer Energie, das ausgestaltet ist, die in elektrische Energie umgewandelte Rotationsenergie und die vom Generator (30) erzeugte elektrische Energie vor der Einspeisung in das Energieversorgungsnetz (20) zusammenzuführen.

5. Stromaggregat nach Anspruch 1, **dadurch gekennzeichnet, dass** die überschüssige Rotationsenergie kontinuierlich einstellbar ist.

6. Stromaggregat nach einem der Ansprüche 1 bis 5, **dadurch gekennzeichnet, dass** die Regelvorrichtung (70) ausgebildet ist, die Drehzahl des Verdichters (63) zu erhöhen.

7. Stromaggregat nach einem der Ansprüche 1 bis 6, **dadurch gekennzeichnet, dass** der Elektromotor als Asynchronmotor, permanentmagneterregter Synchronmotor oder Synchron-Reluktanzmotor ausgestaltet ist.

8. Stromaggregat (10) nach einem der Ansprüche 1 bis 7, **gekennzeichnet durch** eine separate Energieversorgungsquelle;
wobei vorzugsweise die Regelvorrichtung (70) an der separaten Energieversorgungsquelle angeschlossen ist.

9. Verfahren zum Regeln eines Stromaggregats (10) nach einem der Ansprüche 1 bis 8, **gekennzeichnet durch** die Schritte:
a) Antreiben der Turbine (64) des Turboladers (60) mittels Abgase der Verbrennungskraftmaschine (40);
b) Übertragen der Rotationsenergie der Turbine (64) auf den Verdichter (63);
c) Regeln der Rotationsgeschwindigkeit (ω) mittels der Regelvorrichtung (70);
d) Regeln der Leistung der Verbrennungskraftmaschine (40) durch Einstellen des Ladedrucks, welcher der Verbrennungskraftmaschine (40) über den Verdichter (63) zugeführt wird;
wobei durch den Frequenzumrichter (72), der den Elektromotor der Energieverteilungseinheit (75) regelt, überschüssige Rotationsenergie als Funktion der Rotationsgeschwindigkeit (w) der Turbine (64) und der geforderten Änderung der Leistung der Verbrennungskraftmaschine (40) bestimmt wird und
wobei mittels der Energieverteilungseinheit (75) einerseits die überschüssige Rotationsenergie der Turbine (64) in elektrische Energie umgewandelt und in das Energieversorgungsnetz (20) eingespeist wird und andererseits bei Bedarf der von dem Verdichter (63) erzeugte Ladedruck unabhängig von der angetriebenen Turbine (64) durch Zuführen von elektrischer Energie aus dem Energieversorgungsnetz (20) erhöht wird.

10. Verfahren nach Anspruch 9, **dadurch gekennzeichnet, dass** die Rotationsenergie, die in elektrische Energie umgewandelte wurde, und die vom Generator (30) erzeugte elektrische Energie vor der Einspeisung in das Energieversorgungsnetz (20) zusammengeführt werden.

## Claims

1. A power unit (10) for feeding in of energy obtained in particular from gaseous fuels into an electrical power supply network (20), comprising:
a generator (30) for generating electrical energy which is feedable into the power supply network (20);
an internal combustion engine (40) driving the generator (30) and producing a predetermined power;
a turbocharger (60) comprising a turbine (64) and a compressor (63) charging the internal combustion engine (40) by a boost pressure; and
a control device (70);
wherein the turbine (64) and the compressor (63) are connected to each other and each have a rotational speed (ω);
wherein the control device (70) is configured such that the power generated by the internal combustion engine (40) is fully controlled by means of the rotational speed (ω) of the compressor (63);
**characterised in that** the control device (70) comprises a frequency converter (72) and a power distribution unit (75);
wherein the power distribution unit (75) comprises an electric motor controlled by the frequency converter (72) and is configured, on the one hand, to convert excess rotational energy of the turbine (64) into electrical energy and to feed it into the power supply network (20) and, on the other hand, to increase the boost pressure generated by the compressor (63) independently of the driven turbine (64) by supplying electrical energy from the power supply network (20), when required; and
wherein the frequency converter (72) is configured to determine the excess rotational energy as a function of the rotational speed (ω) of the turbine (64) and the required change in power of the internal combustion engine (40).

2. The power unit according to claim 1, **characterised in that** the power of the internal combustion engine (40) is controllable exclusively by the control device (70).

3. The power unit according to claim 1 or 2, **characterised by**
a crankshaft (45) which drives the generator (30), and
at least one shaft (61) by which the turbine (64) and the compressor (63) are connected to each other.

4. The power unit according to any one of claims 1 to 3, **characterised by** a means for combining electrical energy, which is designed to combine the rotational energy converted into electrical energy and the electrical energy generated by the generator (30) before feeding it into the power supply network (20).

5. The power unit according to claim 1, **characterised in that** the excess rotational energy is continuously adjustable.

6. The power unit according to any one of claims 1 to 5, **characterised in that** the control device (70) is adapted to increase the speed of the compressor (63).

7. The power unit according to any one of claims 1 to 6, **characterised in that** the electric motor is designed as an asynchronous motor, permanent magnet excited synchronous motor or synchronous reluctance motor.

8. The power unit (10) according to any one of claims 1 to 7, **characterised by** a separate power supply source;
wherein preferably the control device (70) is connected to the separate power supply source.

9. A method of controlling the power unit (10) according to any one of claims 1 to 8, **characterised by** the steps of:
a) Driving the turbine (64) of the turbocharger (60) by means of exhaust gases from the internal combustion engine (40);
b) Transferring the rotational energy of the turbine (64) to the compressor (63);
c) Controlling of the rotational speed (ω) by means of the control device (70);
d) Regulating the power of the internal combustion engine (40) by adjusting the boost pressure supplied to the internal combustion engine (40) via the compressor (63);
wherein excess rotational energy is determined by the frequency converter (72) controlling the electric motor of the power distribution unit (75) as a function of the rotational speed (ω) of the turbine (64) and the required change in power of the internal combustion engine (40), and
wherein by means of the energy distribution unit (75), on the one hand, the excess rotational energy of the turbine (64) is converted into electrical energy and fed into the energy supply network (20) and, on the other hand, the boost pressure generated by the compressor (63) is increased independently of the driven turbine (64) by supplying electrical energy from the energy supply network (20), when required.

10. Method according to claim 9, **characterised in that** the rotational energy converted into electrical energy and the electrical energy produced by the generator (30) are combined before being fed into the power supply network (20).

## Revendications

1. Groupe électrogène (10) pour l'injection d'énergie obtenue en particulier à partir de combustibles gazeux dans un réseau d'alimentation en énergie électrique (20), comprenant:
un générateur (30) pour produire de l'énergie électrique qui peut être injectée dans le réseau d'alimentation en énergie (20);
un moteur à combustion interne (40) entraînant le générateur (30), qui produit une puissance prédéterminée;
un turbocompresseur (60), qui présente une turbine (64) et un compresseur (63) suralimentant le moteur à combustion interne (40) par une pression de suralimentation, et
un dispositif de régulation (70);
dans lequel la turbine (64) et le compresseur (63) sont reliés entre eux et ont chacun une vitesse de rotation (ω);
dans lequel le dispositif de régulation (70) est conçu de telle sorte que la puissance générée par le moteur à combustion interne (40) est entièrement régulée au moyen de la vitesse de rotation (ω) du compresseur (63);
**caractérisé en ce que** le dispositif de régulation (70) comprend un convertisseur de fréquence (72) et une unité de distribution d'énergie (75);
dans lequel l'unité de distribution d'énergie (75) comprenant un moteur électrique régulé par le convertisseur de fréquence (72) et étant conçue pour, d'une part, convertir l'énergie de rotation excédentaire de la turbine (64) en énergie électrique et l'injecter dans le réseau d'alimentation en énergie (20) et, d'autre part, en cas de besoin, augmenter la pression de suralimentation générée par le compresseur (63) indépendamment de la turbine entraînée (64) en amenant de l'énergie électrique du réseau d'alimentation en énergie (20); et
dans lequel le variateur de fréquence (72) est configuré pour déterminer l'énergie de rotation excédentaire en fonction de la vitesse de rotation (ω) de la turbine (64) et de la variation requise de la puissance du moteur à combustion interne (40).

2. Groupe électrogène selon la revendication 1, **caractérisé en ce que** la puissance du moteur à combustion interne (40) peut être réglée exclusivement par le dispositif de régulation (70).

3. Groupe électrogène selon la revendication 1 ou 2, **caractérisé par**
un vilebrequin (45) qui entraîne l'alternateur (30), et
au moins un arbre (61) par lequel la turbine (64) et le compresseur (63) sont reliés entre eux.

4. Groupe électrogène selon l'une des revendications 1 à 3, **caractérisé par** un moyen de regroupement d'énergie électrique configuré pour regrouper l'énergie de rotation transformée en énergie électrique et l'énergie électrique générée par le générateur (30) avant l'injection dans le réseau d'alimentation électrique (20).

5. Groupe électrogène selon la revendication 1, **caractérisé en ce que** l'énergie de rotation excédentaire est réglable en continu.

6. Groupe électrogène selon l'une des revendications 1 à 5, **caractérisé en ce que** le dispositif de régulation (70) est adapté pour augmenter la vitesse de rotation du compresseur (63).

7. Groupe électrogène selon l'une des revendications 1 à 6, **caractérisé en ce que** le moteur électrique est conçu comme un moteur asynchrone, un moteur synchrone à excitation par aimants permanents ou un moteur synchrone à réluctance.

8. Groupe électrogène (10) selon l'une des revendications 1 à 7, **caractérisé par** une source d'alimentation en énergie séparée;
dans lequel, de préférence, le dispositif de régulation (70) est connecté à la source d'alimentation séparée.

9. Procédé de régulation d'un groupe électrogène (10) selon l'une des revendications 1 à 8, **caractérisé par** les étapes suivantes:
a) l'entraînement de la turbine (64) du turbocompresseur (60) au moyen des gaz d'échappement du moteur à combustion interne (40);
b) transmettre l'énergie de rotation de la turbine (64) au compresseur (63);
c) réguler la vitesse de rotation (ω) au moyen du dispositif de régulation (70);
d) réguler la puissance du moteur à combustion interne (40) en ajustant la pression de suralimentation qui est fournie au moteur à combustion interne (40) par l'intermédiaire du compresseur (63);
dans lequel, grâce au convertisseur de fréquence (72) qui commande le moteur électrique de l'unité de distribution d'énergie (75), l'énergie de rotation excédentaire est déterminée en fonction de la vitesse de rotation (ω) de la turbine (64) et de la variation requise de la puissance du moteur à combustion interne (40); et
dans lequel, au moyen de l'unité de distribution d'énergie (75), d'une part, l'énergie de rotation excédentaire de la turbine (64) est convertie en énergie électrique et injectée dans le réseau d'alimentation en énergie (20) et, d'autre part, en cas de besoin, la pression de charge générée par le compresseur (63) est augmentée indépendamment de la turbine entraînée (64) par l'apport d'énergie électrique provenant du réseau d'alimentation en énergie (20).

10. Procédé selon la revendication 9, **caractérisé en ce que** l'énergie de rotation, qui a été convertie en énergie électrique, et l'énergie électrique produite par le générateur (30) sont réunies avant d'être injectées dans le réseau d'alimentation en énergie (20).
